# EUROPEAN PATENT SPECIFICATION

(11) **EP 3 962 025 B1**
(45) Date of publication and mention of the grant of the patent: **10.07.2024**
(21) Application number: 20193413.0
(22) Date of filing: 28.08.2020
(51) Int. Cl.: H04L 67/62

(54) **COMMUNICATION DEVICE SCHEDULING METHOD, SCHEDULING SERVER, METHOD FOR REPORTING DATA AND COMMUNICATION DEVICE**
VERFAHREN ZUR PLANUNG EINER KOMMUNIKATIONSVORRICHTUNG, PLANUNGSSERVER, VERFAHREN ZUM MELDEN VON DATEN UND KOMMUNIKATIONSVORRICHTUNG
PROCÉDÉ DE PROGRAMMATION DE DISPOSITIF DE COMMUNICATION, SERVEUR DE PROGRAMMATION, PROCÉDÉ DE RAPPORT DE DONNÉES ET DISPOSITIF DE COMMUNICATION

(43) Date of publication of application: 02.03.2022
(73) Proprietor: ACER BEING COMMUNICATION INC., Taipei City 105 (TW); Acer Incorporated, New Taipei City 221 (TW)
(72) Inventor: Po, Chan-Ping, 105 TAIPEI CITY (TW)
(74) Representative: 2K Patentanwälte Blasberg Kewitz & Reichel

(56) References cited:
- HUSAM RAJAB ET AL: "IoT scheduling for higher throughput and lower transmission power", WIRELESS NETWORKS, 23 March 2020 (2020-03-23), 2 Penn Plaza, Suite 701 - New York USA, XP055769988, ISSN: 1022-0038, DOI: 10.1007/s11276-020-02307-1

## Description

### BACKGROUND

### Technical Field

The disclosure relates to a scheduling method, a server, a method for reporting data, and a communication device, and in particular, to a communication device scheduling method, a scheduling server, a method for reporting data, and a communication device.

### Description of Related Art

As technology advances and time passes, technology related to the Internet of Things (IoT) has gain increasing attention. In IoT, some communication devices are not required to transmit large amounts of data but need connection methods requiring low power consumption to maintain operation for a long period of time, and the low-power wide-area network (LPWAN) such as the long range wide area network (LoRaWAN) thereby emerges. LoRaWAN combines three major features including low power consumption, low costs, and long transmission distance and may meet the needs of IoT applications that require operation for a long period time, battery-powered power supply, and large-scale deployment. As a result, LoRaWAN quickly gains popularity among telecom operators and begins to be used in the infrastructure construction of smart cities and smart industries.
HUSAM RAJAB ET AL: " IoT scheduling for higher throughput and lower transmission power " WIRELESS NETWORKS. 23 March 2020 (2020-03-23). 2 Penn Plaza. Suite 701 - New York USA ISSN: 1022-0038. DOI: The documents shows that collision is one of the main factors that negatively impact the LoRa WAN throughput. In the paper, an efficient way to express the probability of collision rate and packet loss mathematically is presented. Furthermore, the document proposes a time scheduling algorithm for LoRa WAN Class C used for synchronization and Class A used for periodicity. Simulations are carried out using matlab.

In LoRaWAN, when the state of the communication device changes (such as detecting a specific event), a request may be sent to the host. Nevertheless, if two communication devices send data to the host at the same frequency band at the same time, since the host may receive data from only one communication device at a time and may not receive multiple pieces of data at the same time, these pieces of data may collide and data loss may thus occur. The above situation may not only occur among communication devices but may also occur in the host. When the host sends a downstream data stream to the communication device, if other devices also use the same frequency band to send data, collision may occur in the host as well.

For the communication device, if the acknowledging message from the host is not received for a long time, the communication device may continue to try to retransmit. Nevertheless, such action may not only cause the bandwidth to be occupied, but also lead to a higher chance of collision with other communication devices.

### SUMMARY

Accordingly, the disclosure provides a communication device scheduling method, a scheduling server, a method for reporting data, and a communication device which may be configured for solving the above technical problems.

The disclosure provides a communication device scheduling method according to claim 1.

The disclosure provides a scheduling server according to claim 10.

The disclosure provides a method for reporting data, according to claim 11.

The disclosure provides a communication device according to claim 16.

To sum up, the scheduling server provided by the disclosure assigns different scheduling channels and/or transmission times to different communication devices and may control the communication devices to adjust the following transmission time according to the time offset of the received data, such that synchronization is achieved between the scheduling server and the communication devices, and collision is accurately prevented.

To make the aforementioned more comprehensible, several embodiments accompanied with drawings are described in detail as follows.

### BRIEF DESCRIPTION OF THE DRAWINGS

FIG. 1 is a schematic view illustrating a scheduling server and communication devices according to an embodiment of the disclosure.
FIG. 2 is a flow chart illustrating a communication device scheduling method according to an embodiment of the disclosure.
FIG. 3 is a schematic view illustrating division of the communication devices into groups according to an embodiment of the disclosure.
FIG. 4 is a flow chart illustrating a method for reporting data according to an embodiment of the disclosure.

### DESCRIPTION OF THE EMBODIMENTS

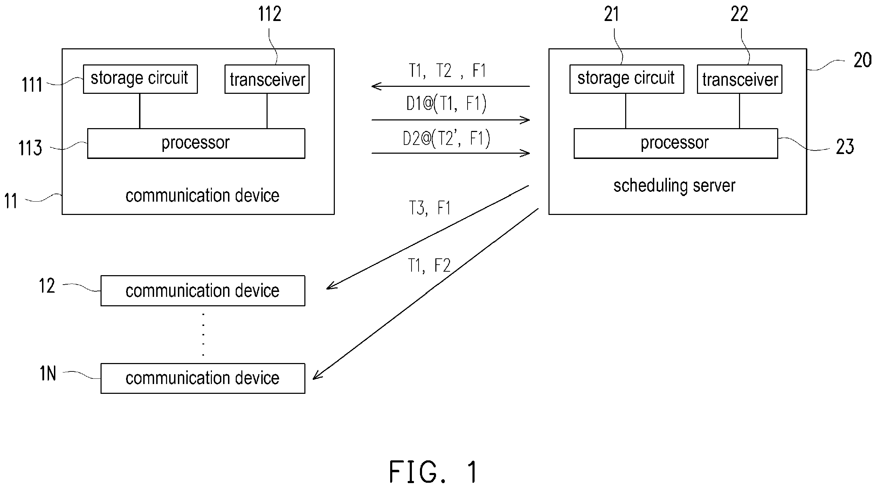

With reference to FIG. 1, which is a schematic view illustrating a scheduling server and communication devices according to an embodiment of the disclosure. In FIG. 1, communication devices 11, 12, ..., and 1N may be Internet of Things (IoT) devices, and a scheduling server 20 may be used for managing the communication devices 11 to 1N, for example. For instance, the communication devices 11 to 1N may be smoke detectors, gas detectors, temperature detectors, or other similar IoT devices and may be used to report specific events (such as fire, temperature, etc.) to a scheduling server 20 when these events are detected.

Generally, in the embodiments provided by the disclosure, different from the conventional method of allowing IoT devices to report events through random access, the scheduling server 20 provided by the disclosure may arrange different scheduling channels and/or transmission times for the communication devices 11 to 1N, such that the communication devices 11 to 1N are prevented from collision during reporting, and probability of data loss may thereby be reduced. Related details are provided in detail in following paragraphs.

In FIG. 1, architectures of the communication devices 11 to 1N are approximately identical, and scheduling performed by the scheduling server 20 on the communication devices 11 to 1N is similar as well, so the following description is provided merely based on interaction between the communication device 11 and the scheduling server 20, and interactions between the communication devices 12 to 1N and the scheduling server 20 may be deduced by a person of ordinary skill in the art based on related teachings.

As shown in FIG. 1, the communication device 11 includes a storage circuit 111, a transceiver 112, and a processor 113. The storage circuit 111 is a fixed or a movable random access memory (RAM) in any form, a read-only memory (ROM), a flash memory, a hard disc, other similar devices, or a combination of the foregoing devices, for example, and may be used to record a plurality of program codes or modules. In different embodiments, the program codes and modules in the storage circuit 111 may be accessed by the processor 113 to accomplish a method provided by the disclosure.

The transceiver 112 may be a component of a protocol unit, for example, and supports signal transmission performed through the global system for mobile communication (GSM), personal handy-phone system (PHS), code division multiple access (CDMA) system, wireless fidelity (Wi-Fi) system, or worldwide interoperability for microwave access (WiMAX).

The transceiver 112 provides wireless access for the communication device 11 in FIG. 11 through the following, at least including a transmitter circuit, a receiver circuit, an analog-to-digital (A/D) converter, a digital-to-analog (D/A) converter, a low noise amplifier (LNA), a mixer, a filter, a matching circuit, a transmission line, a power amplifier (PA), one or a plurality of antenna units, and a local storage media component, but is not limited thereto.

The receiver circuit may include a functional unit to perform operations such as low noise amplification, impedance matching, frequency mixing, down frequency conversion, filtering, and amplification. The transmitter circuit may include a functional unit to perform operations such as amplification, impedance matching, frequency mixing, up frequency conversion, filtering, and amplification. The A/D converter or the D/A converter are configured to convert an analog signal format to a digital signal format during upstream signal processing and to convert the digital signal format to the analog signal format during downstream signal processing.

The processor 113 is coupled to the storage circuit 111 and the transceiver 112 and may be a processor for general use, a processor for special use, a traditional processor, a digital signal processor, a plurality of microprocessors, one or a plurality of microprocessors combined with a digital signal processor core, a controller, a microcontroller, an application specific integrated circuit (ASIC), a field programmable gate array (FPGA) circuit, any other types of integrated circuits, a state machine, a processor based on an advanced RISC machine (ARM), and the like.

In addition, as shown in FIG. 1, the scheduling server 20 includes a storage circuit 21, a transceiver 22, and a processor 23, and implementations thereof may be found with reference to related description of the storage circuit 111, the transceiver 112, and the processor 113 and thus are not repeated herein.

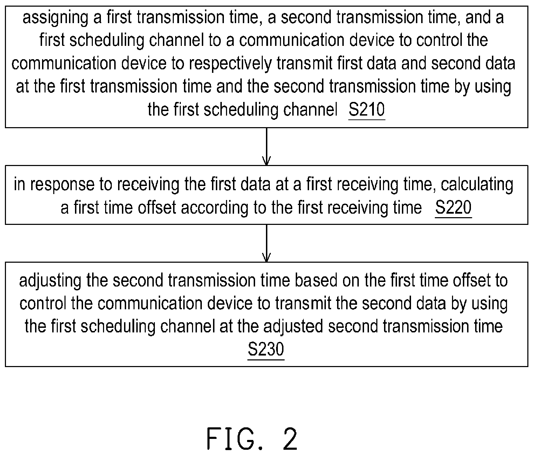

With reference to FIG. 2, which is a flow chart illustrating a communication device scheduling method according to an embodiment of the disclosure. The method provided by this embodiment may be executed by the scheduling server 20 provided in FIG. 1, and each step provided in FIG. 2 is described in detail together with the elements provided in FIG. 1.

First, in step S210, the the processor 23 of the scheduling server 20 may assign a first transmission time T1, a second transmission time T2, and a first scheduling channel F1 to the communication device 11 to control the communication device 11 to respectively transmit first data D1 and second data D2 at the first transmission time T1 and the second transmission time T2 by using the first scheduling channel F1.

Correspondingly, the processor 113 of the communication device 11 may receive the first transmission time T1, the second transmission time T2, and the first scheduling channel F1 assigned by the scheduling server 20 from the scheduling server 20. Next, the processor 113 of the communication device 11 may control the transceiver 112 to transmit the first data D1 to the scheduling server 20 at the first transmission time T1 by using the first scheduling channel F1. In different embodiments, the first data D1 is, for example, a specific event detected by the communication device 11, and the communication device 11 may transmit the first data D1 to the scheduling server 20 at the first transmission time T1.

In addition, the second data D2 is, for example another event detected after the first data D1, and the communication device 11 may choose to transmit the second data D2 to the scheduling server 20 at the second transmission time T2 according to assignment of the scheduling server 20, where the second transmission time T2 occurs after the first transmission time T1.

As described in the foregoing embodiments, the scheduling server 20 may assign different scheduling channels and/or transmission times to different communication devices, such that the communication devices are prevented from colliding with one another. It thus can be seen that when the communication device 11 transmits the first data D1 at the first transmission time T1 by using the first scheduling channel F1, no other communication devices also perform transmission at the first transmission time T1 by using the first scheduling channel F1.

Nevertheless, if accurate synchronization between the communication device 11 and the scheduling server 20 is not achieved, even though the communication device 11 transmits the first data D1 at the first transmission time T1 according to an instruction, the scheduling server 20 may not receive the first data D1 at a predetermined time point. When the scheduling server 20 receives the first data D1 at a first receiving time, since data transmitted by another communication device may at the same time reach the scheduling server 20 at such first receiving time, collision may thus occur. Therefore, steps S220 and S230 are provided in the disclosure to prevent the above situation from occurring.

To be specific, in step S220, in response to receiving the first data D1 at the first receiving time, the processor 23 of the scheduling server 20 may calculate a first time offset according to the first receiving time. In this embodiment, if the scheduling server 20 estimates that the first data D1 is to be received at a specific estimation time (e.g., the first transmission time T1), the processor 23 may calculate the first time offset by subtracting the estimation time from the first receiving time, that is, how late before the scheduling server 20 receives the first data D1, but the disclosure is not limited thereto.

Next, in step S230, the processor 23 may adjust the second transmission time T2 based on the first time offset to control the first communication device 11 to transmit the second data D2 by using the first scheduling channel F1 at an adjusted second transmission time T2'. In an embodiment, the processor 23 may obtain the adjusted second transmission time T2' by subtracting the first time offset from the second transmission time T2. That is, the adjusted second transmission time T2' is the second transmission time T2 one first time offset earlier.

In this case, when the communication device 11 transmits the second data D1 at the second transmission time T2' according to an instruction by using the first scheduling channel F1, the scheduling server 20 may accurately receive the second data D2 at the predetermined time point. In other words, the above mechanism may allow the communication device 11 to be synchronized with the scheduling server 20, and collision is thereby prevented from occurring.

In different embodiments, the scheduling server 20 may directly inform the communication device 11 of the adjusted second transmission time T2' or may merely inform the communication device 11 of the first time offset, so as to allow the communication device 11 to calculate the adjusted second transmission time T2' according to the foregoing teachings by itself, but the disclosure is not limited thereto. After the second transmission time T2' is calculated, the processor 113 of the communication device 11 may control the transceiver 112 to transmit the second data D2 to the scheduling server 20 at the second transmission time T2' by using the first scheduling channel F1.

In addition, regarding the rest of the communication devices 12 to 1N, the scheduling server 20 may also assign scheduling channels and transmissions times to the communication devices 12 to 1N according to the foregoing teachings. Taking the communication device 12 as an example, the scheduling server 20 may control the communication device 12 to transmit data at a transmission time T3 by using the first scheduling channel F1, where the transmission time T3 is different from the first transmission time T1 and the second transmission times T2 and T2' corresponding to the communication device 11. In this case, even though the communication devices 11 and 12 both use the first scheduling channel F1 to transmit data, since the transmission times are different, data collision may not occur.

Taking the communication device 1N as an example, the scheduling server 20 may control the communication device 1N to transmit data at the first transmission time T1 by using a scheduling channel F2, where the scheduling channel F2 is different from the first scheduling channel F1 corresponding to the communication device 11. In this case, even though the communication devices 11 and 1N both transmit data at the first transmission time T1, since different scheduling channels are used, data collision may still not occur.

Further, the foregoing mechanism for achieving synchronization may be executed between the scheduling server 20 and the communication devices 12 to 1N, so that collision may not accidentally occur between the scheduling server 20 and the communication devices 12 to 1N caused by unsynchronization.

In an embodiment, the scheduling server 20 provided by the disclosure may configure one or a plurality of participation channels among the available channels, such that the communication devices 11 to 1N may be managed by the scheduling server 20. Taking the communication device 11 as an example, when the communication device 11 is intended to be managed by the scheduling server 20 (such as a boot process is justed competed), the communication device 11 may listen to whether the participation channel is being occupied by other communication devices first. If no is determined, the communication device 11 may send a registration request to the scheduling server 20 through the listened participation channel. On the other hand, if the listened participation channel is being occupied by other communication devices, the communication device 11 may wait until the participation channel is not occupied before trying to send the registration request to the scheduling server 20 through the participation channel, or alternatively, send the registration request to the scheduling server 20 by choosing another participation channel which is not occupied. After the scheduling server 20 accepts the registration request from the communication device 11, that is, the first transmission time T1, the second transmission time T2, and the first scheduling channel F1 may be correspondingly assigned to the communication device 11 as mentioned in the foregoing embodiments, such that the communication device 11 may transmit data to the scheduling server 20 through scheduling.

Further, in a conventional long range wide area network (LoRaWAN), since IoT devices participate in host management and transmit data through the same batch of channels, when trying to participate in the host management, the IoT devices may collide with other IoT devices that are sending data. Nevertheless, the scheduling server 20 provided by the disclosure separates the participation channel from the scheduling channel configured for data transmission, such that the probability of occurrence of the aforementioned data collision may be reduced.

In addition, in some embodiments, in order to allow each of the communication devices 11 to 1N to report a detected emergency event (e.g., fire) at real time, the scheduling server 20 provided by the disclosure may configure one or a plurality of emergency channels among the available channels and inform the communication devices 11 to 1N of these emergency channels. Taking the communication device 11 as an example, after accepting the registration request from the communication device 11, the scheduling server 20 may inform the communication device 11 of the emergency channel together with the first transmission time T1, the second transmission time T2, and the first scheduling channel F1. In this way, when detecting an emergency event, the communication device 11 may report the emergency event to the scheduling server 20 through the emergency channel in real time. In an embodiment, when intending to report an emergency event, the communication device 11 may try to perform transmission through each of the emergency channels in sequence or may randomly pick a channel for transmission among the emergency channels, but the disclosure is not limited thereto.

Based on the above, it can be seen that the available channels of the scheduling server 20 may generally be divided in to a scheduling channel type, a participation channel type, and an emergency channel type and the like, such that more flexible channel usage strategy is provided compared to that provided by the conventional LoRaWAN. Further, in different embodiments, the scheduling server 20 may dynamically adjust numbers of the scheduling channels, the participation channel, and the emergency channel according to a data report status of each of the managed communication devices 11 to 1N.

For instance, if the scheduling server 20 learns that the communication devices 11 to 1N report less emergency events based on mechanisms such as machine learning, the scheduling server 20 may correspondingly change part of the emergency channels into scheduling channels or participation channels. For another example, if the scheduling server 20 finds out that less registration requests are received, the scheduling server 20 may change part of the participation channels into the scheduling channels or the emergency channels. Alternatively, if the scheduling server 20 finds out that more emergency events are received during certain time periods, the scheduling server 20 may change part of the participation channels into the emergency channels during these time periods, but the disclosure is not limited thereto.

In different embodiments, the scheduling server 20 may also forward the above-mentioned information/signals through a gateway disposed between the scheduling server 20 and each of the communication devices 11 to 1N, but the disclosure is not limited thereto.

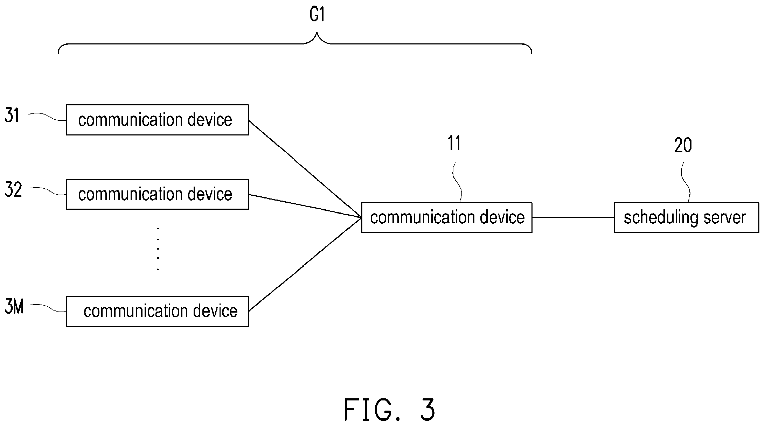

In some embodiments, since the scheduling server 20 has to manage a large number of communication devices, disadvantages such as lack of communication resources and difficult management may exist. Therefore, the scheduling server 20 may divide the managed communication devices into a plurality of groups and identify one leader device in each group, such that the leader device may assist the communication devices in the same group to transmit data to the scheduling server 20. Further description is provided together with FIG. 3.

With reference to FIG. 3, which is a schematic view illustrating division of the communication devices into groups according to an embodiment of the disclosure. In this embodiment, the scheduling server 20 may treat, for example, communication devices 11, 31, 32, ..., and 3M as one group G1, and the communication device 11 may be, for example, selected as the leader device in the group G1. In different embodiments, principles of selecting the leader device by the scheduling server 20 may be determined depends on the situation. For instance, in an embodiment, the scheduling server 20 may select the communication device with a maximum signal coverage range, providing favorable signal quality, or closest to the scheduling server 20 as the leader device of the group, but the disclosure is not limited thereto.

In an embodiment, after the communication device 11 is selected as the leader device of the group G1, the mechanism tough by FIG. 2 may be performed on the communication devices 31 to 3M, such that scheduling channels and transmission times are assigned to the communication devices 31 to 3M. Alternatively, the scheduling channels and the transmission times corresponding to the communication devices 11 and 31 to 3M may be uniformly arranged by the scheduling server 20, but the disclosure is not limited thereto.

Regarding the communication devices 31 to 3M, each of the devices may report a detected event and data to the communication device 11 (i.e., the leader device) through the assigned scheduling channel and the transmission time. Next, the communication device 11 may then report the data coming from the communication devices 31 to 3M to the scheduling server 20 through the assigned scheduling channel and the transmission time. For instance, if the first data D1 comes from the communication device 31, the communication device 11 may transmit the first data D1 to the scheduling server 20 at the first transmission time T1 by using the first scheduling channel F1, but the disclosure is not limited thereto.

In addition, in order to allow the communication devices 31 to 3M to conveniently report emergency events, when the communication devices 31 to 3M detect emergency events, the emergency events may be directly reported to the scheduling server 20 through the emergency channels configured by the scheduling server 20 without being forwarded by the communication device 11 (i.e., the leader device).

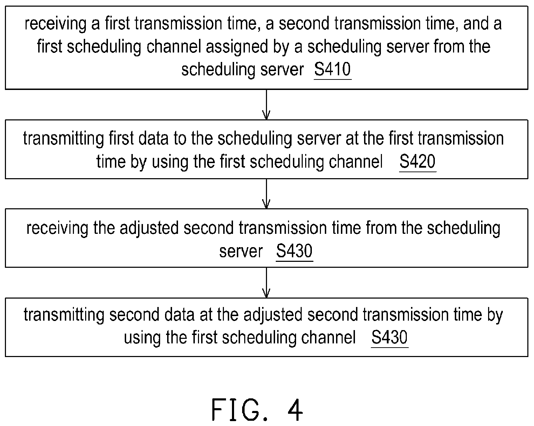

With reference to FIG. 4, which is a flow chart illustrating a method for reporting data according to an embodiment of the disclosure. The method provided by this embodiment may be executed by the communication device 11 provided in FIG. 1, and description is provided together with the elements provided in FIG. 1.

First, in step S410, the processor 113 of the communication device 11 may receive the first transmission time T1, the second transmission time T2, and the first scheduling channel F1 assigned by the scheduling server 20 from the scheduling server 20. In step S420, the processor 113 may control the transceiver 112 to transmit the first data D1 to the scheduling server 20 at the first transmission time T1 by using the first scheduling channel F1. In step S430, the processor 113 may receive the adjusted second transmission time from the scheduling server 20. In step S440, the processor 113 may control the transceiver 112 to transmit the second data D2 at the adjusted second transmission time T2' by using the first scheduling channel F1. Details of the above steps may be found with reference to the description provided in the foregoing embodiments and thus are not repeated herein.

In view of the foregoing, the scheduling server provided by the disclosure assigns different scheduling channels and/or transmission times to different communication devices, such that data collision is prevented from occurring. Further, the scheduling server provided by the disclosure may control the communication devices to adjust the following transmission time according to the time offset of the received data, such that synchronization is achieved between the scheduling server and the communication devices, and collision is accurately prevented. In addition, as the available channels are divided into the scheduling channels, the participation channels, and the emergency channels, the scheduling server provided by the disclosure may flexibly arrange and assign channels to the communication devices.

Besides, the communication devices provided by the disclosure may be divided into different groups, one leader device is selected in each group, and the leader device is configured to act as a medium for forwarding the data provided by other members of the same group to the scheduling server. Accordingly, the scheduling server may conveniently manage the communication devices, and the communication resources may be used effectively.

## Claims

1. A communication device scheduling method, suitable for a scheduling server (20) for managing a plurality of communication devices (11, 12, ..., 1N, 31, 32, ..., 3M), the method comprising:
assigning a first transmission time (T1), a second transmission time (T2), and a first scheduling channel (F1) to a first communication device among the communication devices (11, 12, ..., 1N, 31, 32, ..., 3M) and controlling the first communication device to respectively transmit first data (D 1) and second data (D2) at the first transmission time (T1) and the second transmission time (T2) by using the first scheduling channel (F1), wherein the second transmission time (T2) occurs after the first transmission time (T1);
in response to receiving the first data (D1) at a first receiving time, calculating a first time offset according to the first receiving time, comprising:
estimating a specific estimation time corresponding to the first transmission time (T1), and calculating the first time offset by subtracting the specific estimation time from the first receiving time, wherein the specific estimation time is a time when the scheduling server estimates to receive the first data (D1); and
adjusting the second transmission time (T2) based on the first time offset and controlling the first communication device to transmit the second data (D2) by using the first scheduling channel (F 1) at the adjusted second transmission time (T2'), wherein the adjusted second transmission time T2' is obtained by subtracting the first time offset from the second transmission time (T2).

2. The method according to claim 1, further comprising:
assigning a third transmission time (T3) and the first scheduling channel (F1) to a second communication device among the communication devices (11, 12, ..., 1N, 31, 32, ..., 3M) to control the second communication device to transmit third data at the third transmission time (T3) by using the first scheduling channel (F1), wherein the third transmission time (T3) is different from the first transmission time (T1) or the second transmission time (T2).

3. The method according to claim 1, further comprising:
assigning the first transmission time (T1) and a second scheduling channel (F2) to a third communication device among the communication devices (11, 12, ..., 1N, 31, 32, ..., 3M) to control the third communication device to transmit fourth data at the first transmission time (T1) by using the second scheduling channel (F2), wherein the second scheduling channel (F2) is different from the first scheduling channel (F 1).

4. The method according to claim 1, wherein the scheduling server (20) has a plurality of available channels, and before the step of assigning the first transmission time (T1), the second transmission time (T2), and the first scheduling channel (F1) to the first communication device among the communication devices (11, 12, ..., 1N, 31, 32, ..., 3M), the method further comprises:
configuring at least one participation channel among the available channels;
receiving a registration request of the first communication device through the at least one participation channel;
assigning the first transmission time (T1), the second transmission time (T2), and the first scheduling channel (F1) to the first communication device in response to the registration request.

5. The method according to claim 4, further comprising:
configuring at least one emergency channel among the available channels and informing the first communication device of the at least one emergency channel to allow the first communication device to report an emergency event through the at least one emergency channel.

6. The method according to claim 5, wherein the available channels further comprise a plurality of scheduling channels, the first scheduling channel (F1) is comprised in the scheduling channels, and the method further comprises:
dynamically adjusting numbers of the scheduling channels, the at least one participation channel, and the at least one emergency channel according to a data report status of each of the communication devices (11, 12, ..., 1N, 31, 32, ..., 3M) managed by the scheduling server (20).

7. The method according to claim 1, wherein the communication devices (11, 12, ..., 1N, 31, 32, ..., 3M) are divided into a plurality of groups, the first communication device is a group leader of a first group (G1) among the groups, and the method further comprises:
receiving data transmitted back by other communication devices (11, 12, ..., 1N, 31, 32, ..., 3M) in the first group (G1) through the first communication device.

8. The method according to claim 7, wherein the first communication device has a maximum signal coverage range in the first group.

9. The method according to claim 7, wherein the scheduling server (20) has a plurality of available channels, and the method further comprises:
configuring at least one emergency channel among the available channels and informing the first group (G1) of the at least one emergency channel to allow each of the communication devices (11, 12, ..., 1N, 31, 32, ..., 3M) in the first group (G1) to directly report an emergency event through the at least one emergency channel.

10. A scheduling server (20), comprising:
a storage circuit (111, 21), storing a plurality of modules;
a transceiver (112, 22);
a processor (113, 23), coupled to the storage circuit (111, 21) and the transceiver (112, 22), accessing the modules to execute the following steps:
controlling the transceiver (112, 22) to assign a first transmission time (T1), a second transmission time (T2), and a first scheduling channel (F1) to a first communication device among the communication devices (11, 12, ..., 1N, 31, 32, ..., 3M) and controlling the first communication device to respectively transmit first data (D1) and second data (D2) at the first transmission time (T1) and the second transmission time (T2) by using the first scheduling channel (F1), wherein the second transmission time (T2) occurs after the first transmission time (T1);
in response to the transceiver (112, 22) receiving the first data (D1) at a first receiving time, obtaining a first time offset between the first receiving time and the first transmission time (T1), comprising:
estimating a specific estimation time corresponding to the first transmission time (T1), and calculating the first time offset by subtracting the specific estimation time from the first receiving time, wherein the specific estimation time is a time when the scheduling server estimates to receive the first data (D1); and
adjusting the second transmission time (T2) based on the first time offset and controlling the transceiver (112, 22) and controlling the first communication device to transmit the second data (D2) by using the first scheduling channel (F1) at the adjusted second transmission time (T2'), wherein the adjusted second transmission time T2' is obtained by subtracting the first time offset from the second transmission time (T2).

11. A method for reporting data, suitable for a communication device managed by a scheduling server (20), the method comprising:
receiving a first transmission time (T1), a second transmission time (T2), and a first scheduling channel (F1) assigned by the scheduling server (20) from the scheduling server (20), wherein the second transmission time (T2) occurs after the first transmission time (T1);
transmitting first data (D1) to the scheduling server (20) at the first transmission time (T1) by using the first scheduling channel (F1), wherein the first data (D1) is received by the scheduling server at a first receiving time, a specific estimation time corresponding to the first transmission time (T1) is estimated by the scheduling server, and a first time offset is calculated, by the scheduling server, by subtracting the specific estimation time from the first receiving time, wherein the specific estimation time is a time when the scheduling server estimates to receive the first data (D1), and an adjusted second transmission time (T2') is obtained, by the scheduling server, by subtracting the first time offset from the second transmission time (T2);
receiving the adjusted second transmission time (T2') from the scheduling server (20); and
transmitting second data (D2) at the adjusted second transmission time (T2') by using the first scheduling channel (F1).

12. The method according to claim 11, wherein before the step of receiving the first transmission time (T1), the second transmission time (T2), and the first scheduling channel (F1) assigned by the scheduling server (20) from the scheduling server (20), the method further comprises:
listening to whether at least one participation channel configured by the scheduling server (20) is occupied;
sending a registration request to the scheduling server (20) through the at least one participation channel in response to the at least one participation channel not being occupied;
receiving the first transmission time (T1), the second transmission time (T2), and the first scheduling channel (F1) assigned by the scheduling server (20) from the scheduling server (20) in response to the registration request being accepted.

13. The method according to claim 11, further comprising:
in response to an emergency event, reporting the emergency event through at least one emergency channel configured by the scheduling server (20).

14. The method according to claim 11, wherein the communication device is a leader device of a first group (G1) managed by the scheduling server (20), and the method further comprises:
receiving the first data (D1) from another communication device in the first group (G1) and transmitting first data (D1) to the scheduling server (20) at the first transmission time (T1) by using the first scheduling channel (F1).

15. The method according to claim 14, wherein before the step of receiving the first data (D1) from another communication device in the first group, the method further comprises:
assigning a third transmission time (T3) and a second scheduling channel (F2) to the another communication device to control the another communication device to transmit the first data (D1) at the third transmission time (T3) by using the second scheduling channel (F2).

16. A communication device, comprising:
a storage circuit (111, 21), storing a plurality of modules;
a transceiver (112, 22);
a processor (113, 23), coupled to the storage circuit (111, 21) and the transceiver (112, 22), accessing the modules to execute the following steps:
receiving a first transmission time (T1), a second transmission time (T2), and a first scheduling channel (F1) assigned by the scheduling server (20) from the scheduling server (20), wherein the second transmission time (T2) occurs after the first transmission time (T1);
controlling the transceiver (112, 22) to transmit first data (D1) to the scheduling server (20) at the first transmission time (T1) by using the first scheduling channel (F1), wherein the first data (D1) is received by the scheduling server at a first receiving time, a specific estimation time corresponding to the first transmission time (T1) is estimated by the scheduling server, and a first time offset is calculated, by the scheduling server, by subtracting the specific estimation time from the first receiving time, wherein the specific estimation time is a time when the scheduling server estimates to receive the first data (D1), and an adjusted second transmission time (T2') is obtained, by the scheduling server, by subtracting the first time offset from the second transmission time (T2);
receiving the adjusted second transmission time (T2') from the scheduling server (20); and
controlling the transceiver (112, 22) to transmit second data (D2) at the adjusted second transmission time (T2') by using the first scheduling channel (F1).

## Patentansprüche

1. Ein Verfahren zur Zuteilung von Kommunikationsvorrichtungen, das für einen Zuteilungsserver (20) zur Verwaltung einer Vielzahl von Kommunikationsvorrichtungen (11, 12, ..., 1N, 31, 32, ..., 3M) geeignet ist, wobei das Verfahren umfasst:
Zuweisen eines ersten Übertragungszeitpunkts (T1), eines zweiten Übertragungszeitpunkts (T2) und eines ersten Planungskanals (F1) zu einer ersten Kommunikationsvorrichtung unter den Kommunikationsvorrichtungen (11, 12, ..., 1N, 31, 32, ..., 3M) und Steuern der ersten Kommunikationsvorrichtung, um jeweils erste Daten (D1) und zweite Daten (D2) zu dem ersten Übertragungszeitpunkt (T1) und dem zweiten Übertragungszeitpunkt (T2) unter Verwendung des ersten Planungskanals (F1) zu übertragen, wobei der zweite Übertragungszeitpunkt (T2) nach dem ersten Übertragungszeitpunkt (T1) auftritt;
als Reaktion auf den Empfang der ersten Daten (D1) zu einem ersten Empfangszeitpunkt, Berechnen eines ersten Zeitversatzes entsprechend dem ersten Empfangszeitpunkt, umfassend:
Schätzen einer spezifischen Schätzzeit, die der ersten Übertragungszeit (T1) entspricht, und Berechnen des ersten Zeitversatzes durch Subtrahieren der spezifischen Schätzzeit von der ersten Empfangszeit, wobei die spezifische Schätzzeit eine Zeit ist, zu der der Zuteilungsserver schätzt, die ersten Daten (D1) zu empfangen; und
Anpassen der zweiten Übertragungszeit (T2) auf der Grundlage des ersten Zeitversatzes und Steuern der ersten Kommunikationsvorrichtung, um die zweiten Daten (D2) unter Verwendung des ersten Planungskanals (F1) zu der angepassten zweiten Übertragungszeit (T2') zu übertragen, wobei die angepasste zweite Übertragungszeit T2' durch Subtraktion des ersten Zeitversatzes von der zweiten Übertragungszeit (T2) erhalten wird.

2. Das Verfahren nach Anspruch 1 umfasst ferner:
Zuweisen einer dritten Übertragungszeit (T3) und des ersten Planungskanals (F1) an eine zweite Kommunikationsvorrichtung unter den Kommunikationsvorrichtungen (11, 12, ..., 1N, 31, 32, ..., 3M), um die zweite Kommunikationsvorrichtung zu steuern, um dritte Daten zur dritten Übertragungszeit (T3) unter Verwendung des ersten Planungskanals (F1) zu übertragen, wobei sich die dritte Übertragungszeit (T3) von der ersten Übertragungszeit (T1) oder der zweiten Übertragungszeit (T2) unterscheidet.

3. Das Verfahren nach Anspruch 1 umfasst ferner:
Zuweisen der ersten Übertragungszeit (T1) und eines zweiten Planungskanals (F2) zu einer dritten Kommunikationsvorrichtung unter den Kommunikationsvorrichtungen (11, 12, ..., 1N, 31, 32, ..., 3M), um die dritte Kommunikationsvorrichtung zu steuern, um vierte Daten zur ersten Übertragungszeit (T1) unter Verwendung des zweiten Planungskanals (F2) zu übertragen, wobei sich der zweite Planungskanal (F2) von dem ersten Planungskanal (F1) unterscheidet.

4. Das Verfahren nach Anspruch 1, wobei der Zuteilungsserver (20) über eine Vielzahl von verfügbaren Kanälen verfügt und das Verfahren vor dem Schritt der Zuweisung der ersten Übertragungszeit (T1), der zweiten Übertragungszeit (T2) und des ersten Planungskanals (F1) an die erste Kommunikationsvorrichtung unter den Kommunikationsvorrichtungen (11, 12, ..., 1N, 31, 32, ..., 3M) ferner umfasst:
Konfiguration von mindestens einem der verfügbaren Kanäle für die Teilnahme;
Empfang einer Registrierungsanfrage des ersten Kommunikationsgeräts über den mindestens einen Teilnahmekanal;
Zuweisen der ersten Übertragungszeit (T1), der zweiten Übertragungszeit (T2) und des ersten Planungskanals (F1) an das erste Kommunikationsgerät als Reaktion auf die Registrierungsanforderung.

5. Das Verfahren nach Anspruch 4 umfasst ferner:
Konfigurieren mindestens eines Notfallkanals unter den verfügbaren Kanälen und Informieren der ersten Kommunikationsvorrichtung über den mindestens einen Notfallkanal, damit die erste Kommunikationsvorrichtung ein Notfallereignis über den mindestens einen Notfallkanal melden kann.

6. Das Verfahren nach Anspruch 5, wobei die verfügbaren Kanäle weiterhin eine Vielzahl von Planungskanälen umfassen, der erste Planungskanal (F1) in den Planungskanälen enthalten ist und das Verfahren weiterhin umfasst:
dynamisches Anpassen der Anzahl der Planungs-Kanäle, des mindestens einen Teilnahme-Kanals und des mindestens einen Notfall-Kanals in Abhängigkeit von einem Datenbericht-Status jedes der Kommunikationsgeräte (11, 12, ..., 1N, 31, 32, ..., 3M), die von dem Planungs-Server (20) verwaltet werden.

7. Das Verfahren nach Anspruch 1, wobei die Kommunikationsgeräte (11, 12, ..., 1N, 31, 32, ..., 3M) in eine Vielzahl von Gruppen unterteilt sind, das erste Kommunikationsgerät ein Gruppenleiter einer ersten Gruppe (G1) unter den Gruppen ist, und das Verfahren ferner umfasst:
Empfang von Daten, die von anderen Kommunikationsvorrichtungen (11, 12, ..., 1N, 31, 32, ..., 3M) der ersten Gruppe (G1) über die erste Kommunikationsvorrichtung zurückgesendet werden.

8. Das Verfahren nach Anspruch 7, wobei das erste Kommunikationsgerät einen maximalen Signalabdeckungsbereich in der ersten Gruppe hat.

9. Das Verfahren nach Anspruch 7, wobei der Zuteilungsserver (20) über eine Vielzahl von verfügbaren Kanälen verfügt, und das Verfahren ferner umfasst:
Konfigurieren mindestens eines Notfallkanals unter den verfügbaren Kanälen und Informieren der ersten Gruppe (G1) über den mindestens einen Notfallkanal, um jedem der Kommunikationsgeräte (11, 12, ..., 1N, 31, 32, ..., 3M) in der ersten Gruppe (G1) zu ermöglichen, ein Notfallereignis direkt über den mindestens einen Notfallkanal zu melden.

10. Ein Zuteilungsserver (20), der Folgendes umfasst:
eine Speicherschaltung (111, 21), die eine Vielzahl von Modulen speichert;
ein Sende-Empfangsgerät (112, 22);
einen Prozessor (113, 23), der mit der Speicherschaltung (111, 21) und dem Transceiver (112, 22) verbunden ist und auf die Module zugreift, um die folgenden Schritte auszuführen:
Steuern des Transceivers (112, 22), um einer ersten Kommunikationsvorrichtung unter den Kommunikationsvorrichtungen (11, 12, ..., 1N, 31, 32, ..., 3M) eine erste Übertragungszeit (T1), eine zweite Übertragungszeit (T2) und einen ersten Planungskanal (F1) zuzuweisen.(11, 12, ..., 1N, 31, 32, ..., 3M) und Steuern der ersten Kommunikationsvorrichtung, um jeweils erste Daten (D1) und zweite Daten (D2) zur ersten Übertragungszeit (T1) und zur zweiten Übertragungszeit (T2) unter Verwendung des ersten Planungskanals (F1) zu übertragen, wobei die zweite Übertragungszeit (T2) nach der ersten Übertragungszeit (T1) auftritt;
als Reaktion darauf, dass der Transceiver (112, 22) die ersten Daten (D1) zu einer ersten Empfangszeit empfängt, Erhalten eines ersten Zeitversatzes zwischen der ersten Empfangszeit und der ersten Übertragungszeit (T1), umfassend:
Schätzen einer spezifischen Schätzzeit, die der ersten Übertragungszeit (T1) entspricht, und Berechnen des ersten Zeitversatzes durch Subtrahieren der spezifischen Schätzzeit von der ersten Empfangszeit, wobei die spezifische Schätzzeit eine Zeit ist, zu der der Zuteilungsserver schätzt, die ersten Daten (D1) zu empfangen; und
Einstellen der zweiten Übertragungszeit (T2) auf der Grundlage des ersten Zeitversatzes und Steuern des Sendeempfängers (112, 22) und Steuern der ersten Kommunikationsvorrichtung, um die zweiten Daten (D2) unter Verwendung des ersten Planungskanals (F1) zu der eingestellten zweiten Übertragungszeit (T2') zu übertragen, wobei die eingestellte zweite Übertragungszeit T2' durch Subtrahieren des ersten Zeitversatzes von der zweiten Übertragungszeit (T2) erhalten wird.

11. Ein Verfahren zum Berichten von Daten, das für eine Kommunikationsvorrichtung geeignet ist, die von einem Zuteilungsserver (20) verwaltet wird, wobei das Verfahren umfasst:
Empfangen eines ersten Übertragungszeitpunkts (T1), eines zweiten Übertragungszeitpunkts (T2) und eines ersten Planungskanals (F1), der von dem Zuteilungsserver (20) zugewiesen wurde, von dem Zuteilungsserver (20), wobei der zweite Übertragungszeitpunkt (T2) nach dem ersten Übertragungszeitpunkt (T1) liegt;
Übertragen erster Daten (D1) an den Zuteilungsserver (20) zur ersten Übertragungszeit (T1) unter Verwendung des ersten Planungskanals (F1), wobei die ersten Daten (D1) von dem Zuteilungsserver zu einer ersten Empfangszeit empfangen werden, eine spezifische Schätzzeit, die der ersten Übertragungszeit (T1) entspricht, von dem Zuteilungsserver geschätzt wird, und ein erster Zeitversatz berechnet wird, durch den Zuteilungsserver berechnet wird, indem die spezifische Schätzzeit von der ersten Empfangszeit subtrahiert wird, wobei die spezifische Schätzzeit eine Zeit ist, zu der der Zuteilungsserver schätzt, die ersten Daten (D1) zu empfangen, und eine angepasste zweite Übertragungszeit (T2') durch den Zuteilungsserver erhalten wird, indem der erste Zeitversatz von der zweiten Übertragungszeit (T2) subtrahiert wird;
Empfangen der angepassten zweiten Übertragungszeit (T2') vom Zuteilungsserver (20); und
Übertragung von zweiten Daten (D2) zur eingestellten zweiten Übertragungszeit (T2') unter Verwendung des ersten Planungskanals (F1).

12. Das Verfahren nach Anspruch 11, wobei das Verfahren vor dem Schritt des Empfangens der ersten Übertragungszeit (T1), der zweiten Übertragungszeit (T2) und des ersten Planungskanals (F1), der durch den Zuteilungsserver (20) zugewiesen wurde, vom Zuteilungsserver (20) weiterhin umfasst:
Abhören, ob mindestens ein vom Scheduling Server (20) konfigurierter Teilnahmekanal belegt ist;
Senden einer Registrierungsanforderung an den Zuteilungsserver (20) über den mindestens einen Teilnahmekanal als Reaktion darauf, dass der mindestens eine Teilnahmekanal nicht belegt ist;
Empfangen der ersten Übertragungszeit (T1), der zweiten Übertragungszeit (T2) und des ersten Planungskanals (F1), der vom Zuteilungsserver (20) zugewiesen wurde, vom Zuteilungsserver (20) als Reaktion auf die Annahme der Registrierungsanfrage.

13. Das Verfahren nach Anspruch 11 umfasst ferner:
als Reaktion auf ein Notfallereignis Meldung des Notfallereignisses über mindestens einen vom Zuteilungsserver (20) konfigurierten Notfallkanal.

14. Das Verfahren nach Anspruch 11, wobei das Kommunikationsgerät ein Führungsgerät einer ersten Gruppe (G1) ist, die von dem Zuteilungsserver (20) verwaltet wird, und das Verfahren ferner umfasst:
Empfangen der ersten Daten (D1) von einem anderen Kommunikationsgerät in der ersten Gruppe (G1) und Übertragen der ersten Daten (D1) an den Zuteilungsserver (20) zur ersten Übertragungszeit (T1) unter Verwendung des ersten Planungs-Kanals (F1).

15. Das Verfahren nach Anspruch 14, wobei das Verfahren vor dem Schritt des Empfangens der ersten Daten (D1) von einem anderen Kommunikationsgerät in der ersten Gruppe ferner umfasst:
Zuweisen einer dritten Übertragungszeit (T3) und eines zweiten Planungskanals (F2) an die andere Kommunikationsvorrichtung, um die andere Kommunikationsvorrichtung zu steuern, die ersten Daten (D1) zur dritten Übertragungszeit (T3) unter Verwendung des zweiten Planungskanals (F2) zu übertragen.

16. Ein Kommunikationsgerät, bestehend aus:
eine Speicherschaltung (111, 21), die eine Vielzahl von Modulen speichert;
ein Sende-Empfangsgerät (112, 22);
einen Prozessor (113, 23), der mit der Speicherschaltung (111, 21) und dem Transceiver (112, 22) verbunden ist und auf die Module zugreift, um die folgenden Schritte auszuführen:
Empfangen eines ersten Übertragungszeitpunkts (T1), eines zweiten Übertragungszeitpunkts (T2) und eines ersten Planungskanals (F1), der von dem Zuteilungsserver (20) zugewiesen wurde, von dem Zuteilungsserver (20), wobei der zweite Übertragungszeitpunkt (T2) nach dem ersten Übertragungszeitpunkt (T1) liegt;
Steuern des Transceivers (112, 22) zum Übertragen erster Daten (D1) an den Zuteilungsserver (20) zur ersten Übertragungszeit (T1) unter Verwendung des ersten Scheduling-Kanals (F1), wobei die ersten Daten (D1) von dem Zuteilungsserver zu einer ersten Empfangszeit empfangen werden, eine der ersten Übertragungszeit (T1) entsprechende spezifische Schätzzeit von dem Zuteilungsserver geschätzt wird und ein erster Zeitversatz durch den Zuteilungsserver berechnet wird, indem die spezifische Schätzzeit von der ersten Empfangszeit subtrahiert wird, wobei die spezifische Schätzzeit eine Zeit ist, zu der der Zuteilungsserver schätzt, die ersten Daten (D1) zu empfangen, und eine angepasste zweite Übertragungszeit (T2') durch den Zuteilungsserver erhalten wird, indem der erste Zeitversatz von der zweiten Übertragungszeit (T2) subtrahiert wird;
Empfangen der angepassten zweiten Übertragungszeit (T2') vom Zuteilungsserver (20); und
Steuern des Transceivers (112, 22), um zweite Daten (D2) zur eingestellten zweiten Übertragungszeit (T2') unter Verwendung des ersten Planungskanals (F1) zu senden.

## Revendications

1. Un procédé d'attribution de dispositifs de communication adapté à un serveur d'attribution (20) pour gérer une pluralité de dispositifs de communication (11, 12, ..., 1N, 31, 32, ..., 3M), le procédé comprenant :
Attribuer un premier temps de transmission (T1), un deuxième temps de transmission (T2) et un premier canal de planification (F1) à un premier dispositif de communication parmi les dispositifs de communication (11, 12, ..., 1N, 31, 32, ..., MM)., 3M) et commander le premier dispositif de communication pour transmettre respectivement des premières données (D1) et des secondes données (D2) au premier instant de transmission (T1) et au second instant de transmission (T2) en utilisant le premier canal de planification (F1), le second instant de transmission (T2) se produisant après le premier instant de transmission (T1) ;
en réponse à la réception des premières données (D1) à un premier instant de réception, calculer un premier décalage temporel correspondant au premier instant de réception, comprenant
estimer un temps d'estimation spécifique correspondant au premier temps de transmission (T1) et calculer le premier décalage temporel en soustrayant le temps d'estimation spécifique du premier temps de réception, le temps d'estimation spécifique étant un temps auquel le serveur d'attribution estime recevoir les premières données (D1) ; et
ajuster le second temps de transmission (T2) sur la base du premier décalage temporel et commander le premier dispositif de communication pour transmettre les secondes données (D2) en utilisant le premier canal de planification (F1) au second temps de transmission ajusté (T2'), le second temps de transmission ajusté T2' étant obtenu en soustrayant le premier décalage temporel du second temps de transmission (T2).

2. Le procédé selon la revendication 1 comprend en outre :
attribuer un troisième temps de transmission (T3) et le premier canal de planification (F1) à un deuxième dispositif de communication parmi les dispositifs de communication (11, 12, ..., 1N, 31, 32, ..., 3M) pour commander le deuxième dispositif de communication afin de transmettre des troisièmes données au troisième temps de transmission (T3) en utilisant le premier canal de planification (F1), le troisième temps de transmission (T3) étant différent du premier temps de transmission (T1) ou du deuxième temps de transmission (T2).

3. Le procédé selon la revendication 1 comprend en outre :
l'attribution du premier temps de transmission (T1) et d'un deuxième canal de planification (F2) à un troisième dispositif de communication parmi les dispositifs de communication (11, 12, ..., 1N, 31, 32, ..., 3M) pour commander le troisième dispositif de communication afin de transmettre des quatrièmes données au premier temps de transmission (T1) en utilisant le deuxième canal de planification (F2), le deuxième canal de planification (F2) étant différent du premier canal de planification (F1).

4. Le procédé selon la revendication 1, dans lequel le serveur d'attribution (20) dispose d'une pluralité de canaux disponibles et le procédé comprend en outre, avant l'étape d'attribution du premier temps de transmission (T1), du deuxième temps de transmission (T2) et du premier canal de planification (F1) au premier dispositif de communication parmi les dispositifs de communication (11, 12, ..., 1N, 31, 32, ..., 3M) :
Configuration d'au moins un des canaux disponibles pour la participation ;
la réception d'une demande d'enregistrement du premier dispositif de communication par l'intermédiaire du au moins un canal de participation ;
attribuer le premier temps de transmission (T1), le deuxième temps de transmission (T2) et le premier canal de planification (F1) au premier dispositif de communication en réponse à la demande d'enregistrement.

5. Le procédé selon la revendication 4 comprend en outre :
configurer au moins un canal d'urgence parmi les canaux disponibles et informer le premier dispositif de communication du au moins un canal d'urgence afin que le premier dispositif de communication puisse signaler un événement d'urgence sur le au moins un canal d'urgence.

6. Le procédé selon la revendication 5, dans lequel les canaux disponibles comprennent en outre une pluralité de canaux de planification, le premier canal de planification (F1) est inclus dans les canaux de planification et comprend en outre le procédé :
l'adaptation dynamique du nombre de canaux de planification, du au moins un canal de participation et du au moins un canal d'urgence en fonction d'un état de rapport de données de chacun des dispositifs de communication (11, 12, ..., 1N, 31, 32, ..., 3M) gérés par le serveur de planification (20).

7. Le procédé selon la revendication 1, dans lequel les dispositifs de communication (11, 12, ..., 1N, 31, 32, ..., 3M) sont divisés en une pluralité de groupes, le premier dispositif de communication est un chef de groupe d'un premier groupe (G1) parmi les groupes, et le procédé comprend en outre :
la réception de données renvoyées par d'autres dispositifs de communication (11, 12, ..., 1N, 31, 32, ..., 3M) du premier groupe (G1) via le premier dispositif de communication.

8. le procédé selon la revendication 7, dans lequel le premier dispositif de communication a une plage de couverture de signal maximale dans le premier groupe.

9. Le procédé selon la revendication 7, dans lequel le serveur d'attribution (20) dispose d'une pluralité de canaux disponibles, et le procédé comprend en outre :
configurer au moins un canal d'urgence parmi les canaux disponibles et informer le premier groupe (G1) de l'au moins un canal d'urgence pour permettre à chacun des dispositifs de communication (11, 12, ..., 1N, 31, 32, ..., 3M) dans le premier groupe (G1) de rapporter un événement d'urgence directement via l'au moins un canal d'urgence.

10. Un serveur d'attribution (20) comprenant
un circuit de mémoire (111, 21) qui stocke une pluralité de modules ;
un émetteur-récepteur (112, 22) ;
un processeur (113, 23) connecté au circuit de mémoire (111, 21) et à l'émetteur-récepteur (112, 22) et accédant aux modules pour exécuter les étapes suivantes :
commander l'émetteur-récepteur (112, 22) pour attribuer un premier temps de transmission (T1), un deuxième temps de transmission (T2) et un premier canal de planification (F1) à un premier dispositif de communication parmi les dispositifs de communication (11, 12, ..., 1N, 31, 32, ..., 3M)., 3M) et commander le premier dispositif de communication pour transmettre respectivement des premières données (D1) et des secondes données (D2) au premier temps de transmission (T1) et au second temps de transmission (T2) en utilisant le premier canal de planification (F1), le second temps de transmission (T2) se produisant après le premier temps de transmission (T1) ;
en réponse au fait que l'émetteur-récepteur (112, 22) reçoit les premières données (D1) à un premier temps de réception, l'obtention d'un premier décalage temporel entre le premier temps de réception et le premier temps de transmission (T1), comprenant :
estimer un temps d'estimation spécifique correspondant au premier temps de transmission (T1) et calculer le premier décalage temporel en soustrayant le temps d'estimation spécifique du premier temps de réception, le temps d'estimation spécifique étant un temps auquel le serveur d'attribution estime recevoir les premières données (D1) ; et
régler le second temps de transmission (T2) sur la base du premier décalage temporel et commander l'émetteur-récepteur (112, 22) et commander le premier dispositif de communication pour transmettre les secondes données (D2) en utilisant le premier canal de planification (F1) au second temps de transmission réglé (T2'), le second temps de transmission réglé T2' étant obtenu en soustrayant le premier décalage temporel du second temps de transmission (T2).

11. Un procédé de rapport de données adapté à un dispositif de communication géré par un serveur d'attribution (20), le procédé comprenant :
recevoir du serveur d'attribution (20) un premier instant de transmission (T1), un deuxième instant de transmission (T2) et un premier canal de planification (F1) attribué par le serveur d'attribution (20), le deuxième instant de transmission (T2) étant postérieur au premier instant de transmission (T1) ;
transmettre des premières données (D1) au serveur d'attribution (20) au premier temps de transmission (T1) en utilisant le premier canal de planification (F1), dans lequel les premières données (D1) sont reçues par le serveur d'attribution à un premier temps de réception, un temps d'estimation spécifique correspondant au premier temps de transmission (T1) est estimé par le serveur d'attribution, et un premier décalage temporel est calculé, est calculé par le serveur d'attribution en soustrayant le temps d'estimation spécifique du premier temps de réception, le temps d'estimation spécifique étant un temps auquel le serveur d'attribution estime recevoir les premières données (D1), et un deuxième temps de transmission ajusté (T2') est obtenu par le serveur d'attribution en soustrayant le premier décalage temporel du deuxième temps de transmission (T2) ;
recevoir le deuxième temps de transmission adapté (T2') du serveur d'attribution (20) ; et
transmission de deuxièmes données (D2) au deuxième temps de transmission réglé (T2') en utilisant le premier canal de planification (F1).

12. Le procédé selon la revendication 11, le procédé comprenant en outre, avant l'étape de réception de la première heure de transmission (T1), de la deuxième heure de transmission (T2) et du premier canal de planification (F1) attribué par le serveur d'attribution (20), la réception du serveur d'attribution (20) :
Écouter si au moins un canal de participation configuré par le serveur d'ordonnancement (20) est occupé ;
l'envoi d'une demande d'enregistrement au serveur d'attribution (20) par l'intermédiaire du au moins un canal de participation en réponse au fait que le au moins un canal de participation n'est pas occupé ;
recevoir du serveur d'attribution (20), en réponse à l'acceptation de la demande d'enregistrement, la première heure de transmission (T1), la deuxième heure de transmission (T2) et le premier canal de planification (F1) attribué par le serveur d'attribution (20).

13. Le procédé selon la revendication 11 comprend en outre :
en réponse à un événement d'urgence, notification de l'événement d'urgence sur au moins un canal d'urgence configuré par le serveur d'attribution (20).

14. Le procédé selon la revendication 11, dans lequel le dispositif de communication est un dispositif de guidage d'un premier groupe (G1) géré par le serveur d'attribution (20), et le procédé comprend en outre :
recevoir les premières données (D1) d'un autre dispositif de communication dans le premier groupe (G1) et transmettre les premières données (D1) au serveur d'attribution (20) au premier temps de transmission (T1) en utilisant le premier canal de planification (F1).

15. Le procédé selon la revendication 14, dans lequel le procédé comprend en outre, avant l'étape de réception des premières données (D1) provenant d'un autre dispositif de communication dans le premier groupe :
l'attribution d'un troisième temps de transmission (T3) et d'un deuxième canal de planification (F2) à l'autre dispositif de communication pour commander l'autre dispositif de communication afin de transmettre les premières données (D1) au troisième temps de transmission (T3) en utilisant le deuxième canal de planification (F2).

16. Un appareil de communication composé de
un circuit de mémoire (111, 21) qui stocke une pluralité de modules;
un émetteur-récepteur (112, 22);
un processeur (113, 23) connecté au circuit de mémoire (111, 21) et à l'émetteur-récepteur (112, 22) et accédant aux modules pour exécuter les étapes suivantes :
recevoir du serveur d'attribution (20) un premier instant de transmission (T1), un deuxième instant de transmission (T2) et un premier canal de planification (F1) attribué par le serveur d'attribution (20), le deuxième instant de transmission (T2) étant postérieur au premier instant de transmission (T1) ;
commander l'émetteur-récepteur (112, 22) pour transmettre des premières données (D1) au serveur d'attribution (20) au premier temps de transmission (T1) en utilisant le premier canal de planification (F1), dans lequel les premières données (D1) sont reçues par le serveur d'attribution à un premier temps de réception, un temps d'estimation spécifique correspondant au premier temps de transmission (T1) est estimé par le serveur d'attribution, et un premier décalage temporel est calculé par le serveur d'attribution, en soustrayant le temps d'estimation spécifique du premier temps de réception, le temps d'estimation spécifique étant un temps auquel le serveur d'attribution estime recevoir les premières données (D1), et un deuxième temps de transmission ajusté (T2') est obtenu par le serveur d'attribution en soustrayant le premier décalage temporel du deuxième temps de transmission (T2) ;
recevoir le deuxième temps de transmission adapté (T2') du serveur d'attribution (20); et
commander l'émetteur-récepteur (112, 22) pour transmettre des secondes données (D2) au second temps de transmission réglé (T2') en utilisant le premier canal de planification (F1).
